Europäisches Patentamt

European Patent Office

Office européen des brevets

(11) Numéro de publication: **0 420 754 A1**

## (12) DEMANDE DE BREVET EUROPEEN

(21) Numéro de dépôt: **90402665.5**

(22) Date de dépôt: **27.09.90**

(51) Int. Cl.5: **G05D 3/12**

(30) Priorité: **29.09.89 FR 8912736**

(43) Date de publication de la demande:
**03.04.91 Bulletin 91/14**

(84) Etats contractants désignés:
**BE CH DE ES GB IT LI NL SE**

(71) Demandeur: **ESSILOR INTERNATIONAL, Cie Générale d'Optique**
**1 Rue Thomas Edison, Echat 902**
**F-94028 Créteil Cédex(FR)**

(72) Inventeur: **Clara, Philippe**
**22bis Rue du Thillard**
**F-94170 Le Perreux sur Marne(FR)**

(74) Mandataire: **CABINET BONNET-THIRION**
**95 Boulevard Beaumarchais**
**F-75003 Paris(FR)**

(54) Ensemble de commande pour élément mobile, en particulier pour dispositif de glantage.

(57) Cet ensemble de commande est du genre comportant un moteur (22) auquel l'élément mobile (20) concerné est asservi en déplacement, et un bloc de commande (24) contrôlant l'alimentation de ce moteur (22).

Suivant l'invention, le moteur (22) mis en oeuvre étant un moteur synchrone, le bloc de commande (24) comporte un détecteur sensible au déphasage entre courant et tension aux bornes d'un enroulement de son stator.

Application, par exemple, aux dispositifs de glantage pour la pose d'un bloc de préhension (12) sur un verre de lunettes (10) à travailler.

FIG.1

## ENSEMBLE DE COMMANDE POUR ÉLÉMENT MOBILE, EN PARTICULIER POUR DISPOSITIF DE GLANTAGE

La présente invention concerne d'une manière générale les dispositifs ou installations dans lesquels un élément mobile est susceptible de venir en butée contre une quelconque pièce.

C'est le cas, par exemple, pour les dispositifs de glantage, c'est-à-dire les dispositifs propres à la pose, sur un verre de lunettes à travailler, et par exemple à déborder, d'un bloc, dit ici par simple commodité bloc de préhension, qui, adapté à adhérer à un tel verre de lunettes de manière provisoire, par l'intermédiaire par exemple d'une ventouse, est destiné à en permettre la mise en place, et le blocage en position, sur une machine appropriée au travail à effectuer.

Ces dispositifs de glantage entrent par exemple dans le cadre des appareils de centrage utilisés au préalable pour le repérage, soit du centre géométrique du verre de lunettes à travailler, soit de son centre optique, le bloc de préhension concerné devant être ensuite disposé suivant une implantation déterminée par rapport à l'un ou l'autre de ces centres.

Ils comportent, usuellement, un organe de glantage, qui est adapté à recevoir, de manière amovible, le bloc de préhension à poser, et qui est lui-même porté par un chariot monté mobile suivant un trajet au cours duquel l'organe de glantage, convenablement orienté, interfère, par le bloc de préhension qu'il porte, avec le verre de lunettes à équiper, et vient donc en butée, par ce bloc de préhension, contre la pièce que constitue ce verre de lunettes.

C'est le cas, par exemple, dans le brevet américain No 4.543.752.

Dans une version mécanisée du dispositif de glantage faisant l'objet de ce brevet américain, la commande du chariot est assurée par un moteur, et il s'agit en pratique d'un moteur synchrone.

L'un des problèmes, dans les dispositifs de glantage de ce type, tient à la nécessité qu'il y a de maîtriser de manière suffisamment précise et sûre la course du chariot pour que, après contact avec le verre de lunettes à équiper, la sollicitation dont est ensuite l'objet ce verre de lunettes ne soit pas de nature à en provoquer de manière intempestive le bris.

On peut songer à tirer profit pour ce faire de la capacité naturelle qu'a un moteur synchrone à caler en bout de course lorsqu'un couple résistant suffisant lui est opposé.

Mais les conditions, ainsi purement mécaniques, d'un tel arrêt du moteur sont incertaines et difficiles à maîtriser avec toute la fiabilité souhaitable.

En particulier, le couple développé par le moteur variant avec sa tension, toute variation extérieure de cette tension interfère de manière préjudiciable, et non contrôlée, sur les réglages précédemment effectués, au risque d'un bris pour le verre de lunettes à équiper.

En outre, un tel arrêt mécanique du moteur entraîne fréquemment des rebondissements du chariot mobile dont il assurait jusque-là l'entraînement.

Outre que, d'un point de vue mécanique aussi bien qu'esthétique, ces rebondissements sont inopportuns, il en résulte un risque supplémentaire de bris pour le verre de lunettes à équiper.

On peut également songer à mesurer le couple sur le rotor du moteur, en appréciant le courant dans un enroulement de son stator.

En effet, en charge, l'amplitude de crête de ce courant augmente de 20 à 30 % par rapport à sa valeur normale en fonctionnement à vide.

Mais, la détection correspondante devant ainsi se faire de manière relative, elle est en pratique complexe à réaliser.

La présente invention a d'une manière générale pour objet une disposition qui permet, au contraire, d'assurer de manière relativement simple une maîtrise convenable de l'entraînement du moteur.

De manière plus générale, elle a pour objet un ensemble de commande pour élément mobile susceptible de venir en butée contre une quelconque pièce, qui est du genre comportant un moteur auquel ledit élément mobile est asservi en déplacement, et un bloc de commande contrôlant l'alimentation de ce moteur, cet ensemble de commande étant d'une manière générale caractérisé en ce que, le moteur mis en oeuvre étant un moteur synchrone, le bloc de commande comporte, d'une part, un circuit de commande qui contrôle l'alimentation électrique du moteur, et, d'autre part, un détecteur, qui est sensible au déphasage entre courant et tension aux bornes d'un enroulement du stator de ce moteur, et auquel est lui-même asservi ledit circuit de commande.

La présente invention est en fait fondée sur le fait que, en service, le courant dans un enroulement du stator d'un moteur synchrone est déphasé par rapport à la tension à ses bornes, en étant en pratique en retard par rapport à celle-ci, le déphasage correspondant variant avec le couple résistant auquel est confronté le rotor de ce moteur.

En pratique, si, en fonctionnement à vide, le courant présente un déphasage de l'ordre de 40° par rapport à la tension, ce déphasage devient pratiquement nul au moment où le moteur est sous le point de caler.

Cette propriété peut s'expliquer par le fait qu'en fonctionnement normal un moteur synchrone se comporte globalement comme un circuit résistif-inductif, tandis que, au calage, il se comporte pratiquement comme un circuit purement résistif.

Suivant l'invention, il est tiré parti de cette variation du déphasage du courant par rapport à la tension pour maîtriser de manière convenable l'alimentation du moteur.

En pratique, il est assuré une inversion de cette alimentation, et donc du sens de rotation du rotor du moteur, lorsque la valeur de ce déphasage devient inférieure à une valeur de seuil déterminée.

Quoi qu'il en soit, les conditions de l'intervention correspondante sur l'alimentation du moteur, qui, suivant l'invention, sont purement électriques, sont avantageusement quasiment insensibles à l'amplitude de la tension d'alimentation de ce moteur, aussi bien, d'ailleurs, qu'à sa fréquence.

Les réglages initiaux pouvant ainsi garder toute leur valeur, et les rebondissements étant évités, tout risque de bris intempestif du verre à équiper est écarté.

En outre, la détection de déphasage à assurer est avantageusement et économiquement relativement simple à réaliser.

Certes, il est connu, par le document US-A- 4 806 838, essentiellement pour des questions d'économie d'énergie, de moduler l'excitation d'un moteur en fonction de sa charge, en détectant pour ce faire le déphasage entre le courant et la tension.

Mais il n'y est pas prévu d'aller jusqu'à l'arrêt, à supposer d'ailleurs qu'on le puisse.

En outre, et surtout, le moteur en cause n'est pas un moteur synchrone, mais un moteur à induction, qui admet du glissement sans décrocher.

Les caractéristiques et avantages de l'invention ressortiront d'ailleurs de la description qui va suivre, à titre d'exemple, en référence aux dessins schématiques annexés sur lesquels :

la figure 1 est une vue en perspective d'un élément mobile auquel est appliqué un ensemble de commande suivant l'invention ;

la figure 2 est un bloc diagramme de cet ensemble de commande ;

la figure 3 est un diagramme illustrant le fonctionnement de cet ensemble de commande ;

les figures 4A, 4B, 4C, 4D sont des vues schématiques, en élévation, de l'élément mobile concerné, pour diverses phases successives de déplacement de celui-ci.

Ces figures illustrent à titre d'exemple l'application de l'invention à un dispositif de glantage 15 destiné à rapporter, sur un verre de lunettes 10 disposé en attente sur une platine 11, un bloc de préhension 12 comportant, par exemple, à cet effet, une ventouse 13. Dans la forme de mise en oeuvre représentée, ce dispositif de glantage 15 comporte, d'une part, un bras de glantage 16, qui est adapté à recevoir de manière amovible le bloc de préhension 12 à poser, et un chariot 20, sur lequel ce bras de glantage 16 est monté pivotant entre deux positions extrêmes, l'une, horizontale, de chargement et de déchargement, l'autre, verticale, de pose, et qui est lui-même mobile verticalement entre deux positions extrêmes, l'une supérieure, de repos, définie par une butée haute 17, l'autre inférieure.

Ce dispositif de glantage 15 ne faisant pas partie en propre de la présente invention, il ne sera pas décrit plus en détail ici.

Il suffira d'indiquer que le chariot 20 est asservi en déplacement à un ensemble de commande 21, que cet ensemble de commande 21 comporte, d'une part, un moteur 22, qui, par une transmission 23, est apte à actionner non seulement le chariot 20 mais encore le bras de glantage 16, et, d'autre part, un bloc de commande 24, qui contrôle l'alimentation de ce moteur 22, et qui est lui-même sous le contrôle d'un bouton poussoir 25 à la disposition de l'opérateur et d'un détecteur de fin de course 26 actionné par le bras de glantage 16 lorsque, le chariot 20 étant lui-même en position haute, ce bras de glantage 16 est en position horizontale de chargement et de déchargement, que, lorsque le chariot 20 se déplace de sa position haute à sa position basse, le bras de glantage 16, alors systématiquement en position de pose, vient interférer, par le bloc de préhension 12 qu'il porte, contre le verre de lunettes 10 à équiper, le chariot 20 portant ce bras de glantage 16 venant alors en quelque sorte en butée contre la pièce que constitue ce verre de lunettes 10, et que ce chariot 20 est soumis à un ressort de rappel 28 qui le sollicite en permanence en direction de sa position haute.

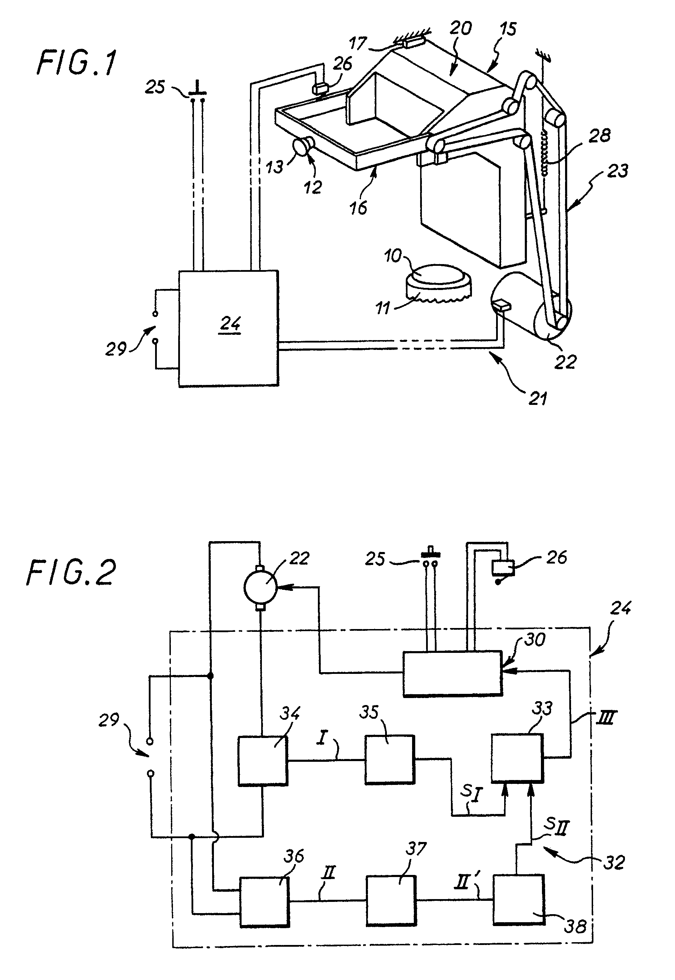

Suivant l'invention, le moteur électrique 22 mis en oeuvre étant un moteur synchrone, le bloc de commande 24, qui reçoit en 29 la tension alternative du secteur, comporte, d'une part, figure 2, un circuit de commande 30, qui, sous le contrôle du bouton poussoir 25 et du détecteur de fin de course 26, contrôle effectivement l'alimentation électrique du moteur 22, et, d'autre part, un détecteur 32, qui est sensible au déphasage entre courant et tension aux bornes d'un enroulement du stator du moteur 22, et auquel est lui-même asservi le circuit de commande 30.

Ainsi qu'on le sait, le stator d'un moteur synchrone comporte au moins un enroulement, et, en pratique, au moins un enroulement par phase lorsqu'il est polyphasé.

Le plus souvent, il comporte, en outre, par phase, pour son démarrage, un enroulement supplémentaire auquel est appliquée une tension convenablement déphasée.

Quoi qu'il en soit, en service, le courant dans un tel enroulement est déphasé par rapport à la tension à ses bornes, en étant en pratique en retard par rapport à cette tension, et ce déphasage varie avec le couple résistant auquel est confronté le rotor du moteur.

Dans la forme de réalisation représentée, le détecteur 32 comporte un comparateur 33, qui reçoit, d'une part, un signal SI, qui est à l'image du courant dans un enroulement du stator du moteur 22, et qui est calé sur le passage par zéro de ce courant, et, d'autre part, un signal SII, qui est de durée déterminée, et qui est lui-même calé sur le passage par zéro de la tension dans cet enroulement.

En pratique, pour l'élaboration du signal SI, le détecteur 32 comporte, successivement, un dispositif 34 propre à la mesure du courant dans l'enroulement considéré du moteur 22, et un dispositif 35 propre à la détection du passage par zéro de ce courant.

Pour l'élaboration du signal SII, il comporte, successivement, un dispositif 36 propre à constituer une interface convenable entre la tension du secteur et la basse tension convenant au bloc de commande 24, un dispositif 37 propre à la détection du passage par zéro de cette tension, et un dispositif 38 propre à la constitution d'un créneau de durée déterminée à compter du passage par zéro de cette tension.

La constitution, logique, des dispositifs 34, 35, 36, 37 et 38, aussi bien, d'ailleurs, que celle du circuit de commande 30 et du comparateur 33, avec mise à niveau et mise en forme, relevant de l'homme de l'art, et résultant des seules fonctions qu'ont à assurer ces circuits et ce comparateur, elle ne sera pas décrite ici.

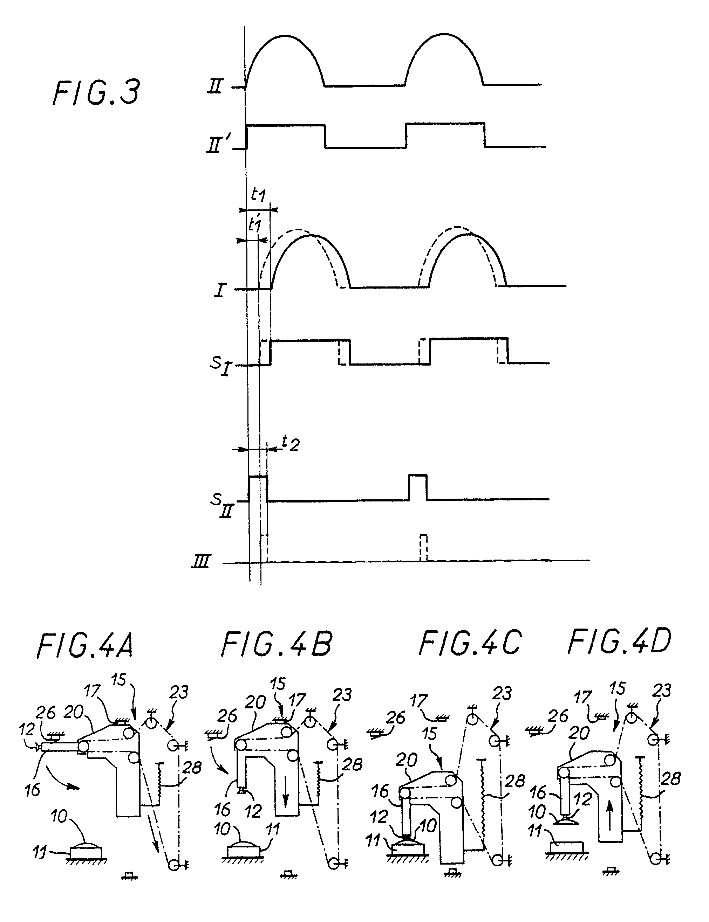

Sur le diagramme de la figure 3, ont été reportés, à la ligne II, le signal à la sortie du dispositif 36, à la ligne II', le signal à la sortie du dispositif 37, à la ligne I, le signal à la sortie du dispositif 34, aux lignes SI, SII, les signaux à l'entrée du comparateur 33, et à la ligne III les impulsions délivrées par celui-ci.

En fonctionnement à vide, les signaux I et SI sont ceux représentés en trait plein.

La tension dans l'enroulement concerné du moteur 22 est déphasée par rapport au courant dans cet enroulement, en étant en retard d'un temps $t_1$ sur ce courant.

En fonctionnement en charge, ce déphasage diminue.

Les signaux I et SI sont alors ceux représentés en traits interrompus.

Le déphasage n'est plus que de $t'_1$ et l'amplitude de crête est supérieure.

Le signal SII constitue en pratique une fenêtre de validité, dont la durée $t_2$ est réglée en atelier.

Si le comparateur 33 reçoit le signal de déphasage SI au cours de cette fenêtre de validité SII, il intervient sur le circuit de commande 30, en lui adressant une impulsion III.

Au repos, figure 4A, le chariot 20 est en position haute, en appui contre la butée haute 17, sous la sollicitation de son ressort de rappel 28, et, conjointement, le bras de glantage 16 est en position de chargement et de déchargement.

Dans cette position de chargement et de déchargement, le bras de glantage 16 intervient sur le détecteur de fin de course 26, ce qui référence le départ d'un cycle de travail.

Ce cycle de travail est initié par une action d'enfoncement exercée sur le bouton poussoir 25.

Le moteur 22 entre alors en action.

Dans un premier temps, figure 4B, le bras de glantage 16 passe en position de pose, en abandonnant le détecteur de fin de course 26.

Dans un deuxième temps, le chariot 20 abandonne à son tour sa butée haute 17 et se déplace en direction de sa position basse.

Au cours de son trajet, il vient appliquer le bloc de préhension 12 sur le verre à équiper 10, figure 4C.

Le couple résistant dont le rotor du moteur 22 est alors l'objet augmente, et le déphasage entre le courant dans l'enroulement de son stator concerné par le bloc de commande 24 diminue.

Lorsque la valeur de ce déphasage tombe en dessous d'une valeur de seuil déterminée réglée par la durée $t_2$ de la fenêtre de validité que constitue le signal SII, le circuit de commande 30 que comporte ce bloc de commande 24, actionné en conséquence par le comparateur 33 suivant le processus succinctement décrit ci-dessus, commande une inversion du sens de rotation du rotor du moteur 22.

Conjointement avec l'action du ressort de rappel 28, il en résulte une remontée, en direction de sa position haute, du chariot 20, figure 4D.

Bien entendu, la présente invention ne se limite pas à la forme de réalisation décrite et représentée, mais englobe toute variante d'exécution.

Le domaine d'application de l'invention ne se limite pas non plus aux seuls dispositifs de glantage en référence auxquels elle a été plus particulièrement décrite.

Ce domaine d'appication s'étend au contraire aussi bien à tout dispositif ou installation comportant un quelconque élément mobile susceptible de venir en butée contre une quelconque pièce, comme cela peut par exemple être le cas pour le capot d'une machine, et, notamment, pour le capot d'une meuleuse.

**Revendications**

1. Ensemble de commande pour élément mobile (20) susceptible de venir en butée contre une quelconque pièce (10), du genre comportant un moteur (22) auquel ledit élément mobile (20) est asservi en déplacement, et un bloc de commande (24) contrôlant l'alimentation dudit moteur (22), caractérisé en ce que, le moteur (22) mis en oeuvre étant un moteur synchrone, le bloc de commande (24) comporte, d'une part, un circuit de commande (30) qui contrôle l'alimentation électrique du moteur (22), et, d'autre part, un détecteur (32), qui est sensible au déphasage entre courant et tension aux bornes d'un enroulement du stator de ce moteur (22), et auquel est lui-même asservi ledit circuit de commande (30).

2. Ensemble de commande suivant la revendication caractérisé en ce que ledit détecteur (32) comporte un comparateur (33) qui reçoit, d'une part, un signal (SI) à l'image du courant dans l'enroulement concerné et calé sur le passage par zéro de ce courant, et, d'autre part, un signal (SII) de durée déterminée et calé sur le passage par zéro de la tension dans ledit enroulement.

3. Ensemble de commande suivant l'une quelconque des revendications 1, 2, caractérisé en ce que, lorsque le déphasage entre courant et tension dans l'enroulement concerné tombe en dessous d'une valeur de seuil déterminée, le circuit de commande (30) que comporte le bloc de commande (24) commande une inversion du sens de rotation du rotor du moteur (22).

FIG.1

FIG.2

FIG.3

FIG.4A    FIG.4B    FIG.4C    FIG.4D

**Office européen des brevets**

# RAPPORT DE RECHERCHE EUROPEENNE

Numéro de la demande

**EP 90 40 2665**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 806 838 (HAROLD J. WEBER) <br> * abrégé * * colonne 5, ligne 65 - colonne 6, ligne 38; revendications 1-20; figures 1, 4, 7, 10 * <br> – – – | 1-3 | G 05 D 3/12 |
| Y | FR-A-2 608 492 (ESSILOR INTERNATIONAL) <br> * abrégé * * page 1, lignes 13 - 25 * * page 9, lignes 22 - 35; revendications 1-13; figures 1-7 * <br> – – – | 1-3 | |
| D,A | EP-A-0 082 322 (WERNICKE & CO.) <br> * abrégé; revendications 1-11; figure 1 * <br> – – – | 1-3 | |
| A | FR-A-2 502 420 (BOSH-SIEMENS HAUSGERATE GMBH) <br> * page 2, lignes 11 - 35; revendications 1-3; figures 1, 2 * <br> – – – | 1-3 | |
| A | PATENT ABSTRACTS OF JAPAN vol. 10, no. 11 (E-374)(2068) 17 janvier 1986, <br> & JP-A-60 174086 (MITSUBISHI DENKI K.K.) 07 septembre 1985, <br> * le document en entier * <br> – – – | 1-3 | |
| A | PATENT ABSTRACTS OF JAPAN vol. 11, no. 122 (E-500)(2569) 16 avril 1987, <br> & JP-A-61 269692 (TOSHIBA CORP) 29 novembre 1986, <br> * le document en entier * <br> – – – – – | 1-3 | **DOMAINES TECHNIQUES RECHERCHES (Int. Cl.5)** <br><br> G 05 D <br> B 24 B <br> H 02 P |

Le présent rapport de recherche a été établi pour toutes les revendications

| Lieu de la recherche | Date d'achèvement de la recherche | Examinateur |
|---|---|---|
| La Haye | 03 janvier 91 | SCHOBERT D.A.V. |